# EUROPEAN PATENT APPLICATION

(11) **EP 4 102 061 A1**
(43) Date of publication of application: **14.12.2022**
(21) Application number: 21178785.8
(22) Date of filing: 10.06.2021
(51) Int. Cl.: F03D 13/10, F03D 15/10

(54) **SUPPORT ASSEMBLY**

(71) Applicant: Siemens Gamesa Renewable Energy A/S, 7330 Brande (DK)
(72) Inventor: FREDRISEN, Kim, 7600 Struer (DK); DAVOODI, Soran, 7100 Vejle (DK)
(74) Representative: SGRE-Association

(57) **Abstract**

A support assembly (10) for carrying at least a part of the load of a drive train, a canopy structure and/or other components arranged inside a nacelle (2) of a wind turbine (1), the support assembly (10) comprising a bed frame (12) structurally establishing a connection between the drive train and/or the nacelle (2) and a tower (8) of the wind turbine (1), and a support structure (11) coupled to the bed frame (12) configured to support at least a part of the load of the canopy structure and/or components arranged inside the nacelle (2), characterized in that the support assembly (10) further comprises a coupling means (20) to couple the support structure (11) to the bed frame (12), wherein the coupling means (20) comprises a plurality of pins (21) configured to be inserted in insertion holes.

## Description

The present invention relates to a support assembly for carrying at least a part of the load of a drive train, a canopy structure and/or other components arranged inside a nacelle of a wind turbine. The present invention further relates to a method for coupling a support structure to a bed frame of a support assembly of a wind turbine.

Wind turbines are increasingly used for the generation of electrical energy. A wind turbine comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator. Hence, the rotational energy of the blades is transferred to the generator, which then converts the mechanical energy into electricity and transfers the electricity to the electrical grid.

The nacelle usually comprises a support assembly supporting at least a part of the drive train, electrical components and/or other components, such as the canopy structure or the housing of the nacelle. Additionally, by providing a support assembly, the stiffness in bending about a horizontal axis perpendicular to the shaft axis is increased.

The support assembly usually comprises a bed frame, which is the structural component of the wind turbine that is capable of transferring the loads and the vibrations acting on the rotor of the wind turbine to the tower of the wind turbine. For this, the bed frame is connected to the tower in a way that the nacelle can be rotated on the tower. The bed frame is usually built in a rigid way to withstand the loads and vibrations of the rotor.

The support assembly further comprises a support structure that carries several systems and components present in the nacelle. The systems and components are for example the electrical system, such as the converter, the cooling system or the control system. The bed frame can carry the weight of the support structure and the systems and components attached to the support structure.

The bed frame and the support structure can be manufactured together as one piece. However, the transport of an assembled support assembly is difficult due to the weight and dimensions of the components.

Alternatively, the support structure is coupled to the bed frame of the support assembly. Usually, the support structure is mounted to the bed frame by a plurality of bolts, as can be seen in EP 3 633 190 A1. Hence, the support structure is firmly attached to the bed frame.

The installation of the support assembly on the tower of the wind turbine is a complex task requiring the coupling of the support structure to the bed frame if they are not manufactured together. This means that the bolt coupling the support structure to the bed frame are manually tightened on site to install the support assembly on the tower. This process is very time consuming and considerably increases the costs of installation. Additionally, the prolonged installation time might lead to health and safety issues, as the workers work under suspended load to tighten the bolts. Additionally, it further leads to a higher weather exposure of the open parts during installation. At last, there is a higher risk of a faulty installation, as the preload of the bolts is applied manually by turning the bolts, leading to a different preload at each bolt.

Methods to ease the coupling of components in a wind turbine are known from the prior art. In the document WO 2019/185100 A1, a connection system for joining wind turbine components is known. In this connection system, pins are configured to be engaged with bores having a tapered profile, which eases the introduction of the pin inside the bore. In WO 2019/238179 A1, a combination of bolts and dowel pins installed in their corresponding holes is used to couple powertrain components. However, the methods and coupling assemblies known in the prior art require the manual handling to couple the components of the wind turbine, in particular to couple the support structure and the bed frame.

Current developments of wind turbines tend to a modular assembly of the wind turbine to ease the transport and installation process of wind turbines and be able to use the same modular components for different wind turbine models. However, modular wind turbines are assembled on site as well and the coupling of the modular parts together is very time consuming due to the preciseness required and the weight of the components, which have to be hoisted.

It is an object of the invention to provide a support assembly for carrying at least a part of the load of a drive train, a canopy structure and/or other components arranged inside a nacelle of a wind turbine which overcomes the problems known form the prior art.

This is achieved by a support assembly according to claim 1 and a method coupling a support structure to a bed frame of a support assembly of a wind turbine according to claim 15.

The present invention relates to a support assembly for carrying at least a part of the load of a drive train, a canopy structure and/or other components arranged inside a nacelle of a wind turbine. According to the invention, the support assembly comprises a bed frame structurally establishing a connection between the drive train and/or the nacelle and a tower of the wind turbine, and a support structure coupled to the bed frame configured to support at least a part of the load of the canopy structure and/or components arranged inside the nacelle.

According to the invention, the support assembly further comprises a coupling means to couple the support structure to the bed frame, wherein the coupling means comprises a plurality of pins configured to be inserted in insertion holes.

The use of pins inserted in insertion holes is a fast and reliable way to connect wind turbine components, as it requires less installation time than bolts, which have to be tightened.

The pins can automatically be inserted in the insertion holes when the support structure and the bed frame are in the correct position, further decreasing the installation time. This can be for example achieved by a spring mechanism, which releases the pin when the support structure and the bed frame are in the correct position.

According to a preferred embodiment of the invention, the pins are arranged at the support structure and the insertion holes are arranged at the bed frame. The support structure is therefore placed at the correct position and the pins of the support structure are inserted into the insertion holes of the bed frame to couple both components together.

According to another preferred embodiment of the invention, the pins are arranged at the bed frame and the insertion holes are arranged at the support structure. The support structure is therefore placed at the correct position and the pins of the bed frame are inserted into the insertion holes of the support structure to couple both components together.

According to another preferred embodiment of the invention, the pins are inserted inside the support structure during transport to reduce the width of the support structure and avoid damages to the pins. The pins can for example be telescopic or extensible pins. The pins are then kept inside the body of the support structure and do not protrude from the surface of the support structure until the support structure is placed in the correct position. This measure reduces the damages that protruding pins can make to other components during the transport.

According to another preferred embodiment of the invention, the pins are inserted inside the bed frame during transport to reduce the width of the bed frame and avoid damages to the pins. The pins can for example be telescopic or extensible pins. The pins are then kept inside the body of the bed frame and do not protrude from the surface of the bed frame until the support structure is placed in the correct position. This measure reduces the damages that protruding pins can make to other components during the transport.

According to another preferred embodiment of the invention, the support assembly further comprises hydraulic actuators for engaging the pins in the insertion holes.

The hydraulic actuators can be shafts pneumatically moved along an axis by the movement of a piston operating by means of a fluid.

For example, the hydraulic actuator can be a hydraulic cylinder used to give a unidirectional force through a unidirectional stroke by means of a pressurized hydraulic fluid, which is typically oil. The hydraulic cylinder comprises a cylinder barrel, in which a piston connected to a piston rod moves back and forth. The barrel is closed on one end by the cylinder bottom, i.e. the cap, and the other end by the cylinder head, i.e. the gland, where the piston rod comes out of the cylinder. The piston has sliding rings and seals. The piston divides the inside of the cylinder into two chambers, the bottom chamber, i.e. the cap end, and the piston rod side chamber, i.e. the rod end. A hydraulic pump delivers a fixed or regulated flow of hydraulic fluid to the hydraulic cylinder to move the piston.

The use of hydraulic actuators presents an automatic way of coupling the support structure to the bed frame, with a faster and more reliable coupling than the manual insertion of each pin into the insertion hole. The coupling can be done from the ground with a control system triggering the movement of the hydraulic actuators, considerably reducing the risk of injuries due to suspended loads during the installation of wind turbines.

According to another preferred embodiment of the invention, for each pin there is a hydraulic actuator which inserts the pin into the insertion hole. This measure assures a correct installation of each pin in the coupling of the bed frame and the support structure.

According to another preferred embodiment of the invention, the hydraulic actuators are configured to keep the pins in the inserted position, particularly during operation of the wind turbine when the pins might loosen, by pressing against the pins to reinsert the pins in the insertion holes.

The vibrations caused during operation might loosen the pins from the insertion holes, increasing the risk of damage of the wind turbine. The hydraulic actuators avoid the loosening of the pins by pressing against the pins to reduce the risk of loosening of the pins or to reinsert the pins in case the pins loosen.

According to another preferred embodiment of the invention, the hydraulic actuators have an adjustable stroke. An adjustable stroke is particularly advantageous, as it can be sensed with an adjustable stroke if the pins are loosening, thereby allowing a more accurate monitoring of the insertion of the pins in the insertion holes. Additionally, with an adjustable stroke the same hydraulic actuators can be used for different pin lengths, for example for the connection of support assemblies of different turbine models.

According to another preferred embodiment of the invention, a yaw system is arranged at the bed frame to yaw the nacelle of the wind turbine. A yaw system with yaw motors installed at the bed frame is capable of rotating the nacelle on the tower in a way that the rotor of the wind turbine faces the direction of the wind.

According to another preferred embodiment of the invention, the support structure comprises a plurality of load carrying beams or bars coupled together. The use of beams or bust is a robust and stable method for support structures.

According to another preferred embodiment of the invention, the support structure comprises a floor level support where components of the wind turbine, in particular a converter, can be supported.

The beams can be arranged in different horizontally oriented sets so as to have a multiple level support and carry different wind turbine components at different heights. A floor level support, relative to the floor level of the nacelle, can be established to carry the power converter. The different horizontally oriented beam sets can be connected together by vertical and/or diagonal beams.

According to another preferred embodiment of the invention, the support structure comprises an upper level support where components of the wind turbine, in particular a main bearing, a gearbox and/or a generator of a drive train of the wind turbine, can be supported.

The beams can be arranged in different horizontally oriented sets so as to have a multiple level support and carry different wind turbine components at different heights. An upper level support can be established to support the drive train of the wind turbine. The different horizontally oriented beam sets can be connected together by vertical or diagonal beams.

According to another preferred embodiment of the invention, the support assembly further comprises a control system to monitor the insertion depth of the pins in the insertion holes.

By monitoring the insertion depth of the pins in the insertion hole, the wear of the coupling elements can be analyzed during the lifetime of the wind turbine and faulty pins can be replaced in time before risking a failure of the wind turbine.

Additionally, the use of a control system is an accurate way to control the coupling process of the support structure to the bed frame during the installation of the wind turbine.

According to another preferred embodiment of the invention, a warning message is displayed by the control system when a pin loosens outside the tolerance values set at the system. This will allow the worker to know if measures are to be taken to replace the pin before a damage to the wind turbine occurs or if the pin can automatically be inserted by the hydraulic actuator.

According to another preferred embodiment of the invention, guides are used for placing the support structure correctly before coupling the support structure to the bed frame. This is a simple and efficient way to ease the installation of the support assembly.

Yet another aspect of the invention relates to a method for coupling a support structure to a bed frame of a support assembly of a wind turbine, the support assembly comprising a coupling means to couple the support structure to the bed frame, wherein the coupling means comprises a plurality of pins configured to be inserted in insertion holes. The method comprising the steps of placing the support structure at a position where the pins can be slid in the insertion holes to couple the support structure to the bed frame and inserting the pins into the insertion holes by means of hydraulic actuators.

In order to facilitate the understanding of the characteristics of the invention and being an integral part of this specification, some drawing sheets are attached on which figures, with an illustrative but not limiting character, the following is represented:
Figure 1 shows a schematic cross-sectional view of a wind turbine.
Figure 2 shows a support assembly comprising a support structure and a bed frame coupled together with a plurality of pins.
Figure 3 shows a plurality of hydraulic actuators attached to the bed frame of the support assembly.
Figure 4 shows the bed frame of Figure 3 coupled to the support structure of the support assembly, wherein the pistons of the hydraulic actuators are outside the cylinder barrels and therefore pressing the pins in the insertion holes of the support structure.
Figure 5 shows a drive train and electrical components of a wind turbine supported by the support assembly.
Figure 6 shows a cross sectional view of Figure 5, wherein the hydraulic actuators arranged inside the bed frame can be seen in this figure.
Figure 7 shows a cross sectional view of Figure 5 from another perspective, wherein the hydraulic actuators with the pistons outside the cylinder barrels can be seen.

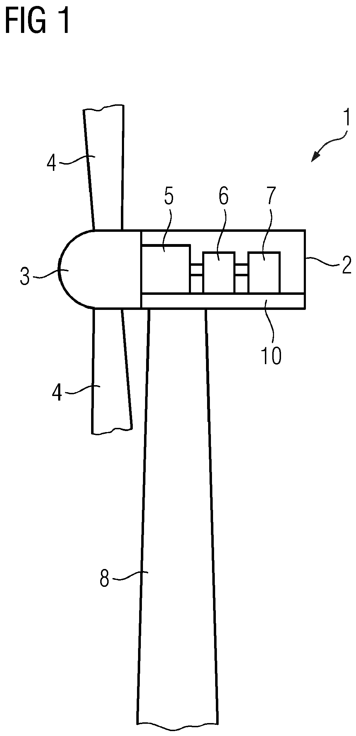

Figure 1 shows a schematic cross-sectional view of a wind turbine 1. The wind turbine 1 comprises a tower 8 on top of which a nacelle 2 is rotatably mounted. A hub 3 is connected to the nacelle 2. A plurality of blades 4 are mounted on the hub 3.

The nacelle 2 comprises a canopy structure and a support assembly 10. The canopy structure is mounted on the support assembly 10. The support assembly 10 supports the canopy structure and other components of the nacelle 2 such as the drive train installed inside the nacelle 2. The drive train comprises a main bearing 5 connected to the hub 3, a gearbox 6 connected to the main bearing 5 and a generator 7 connected to the gearbox 6.

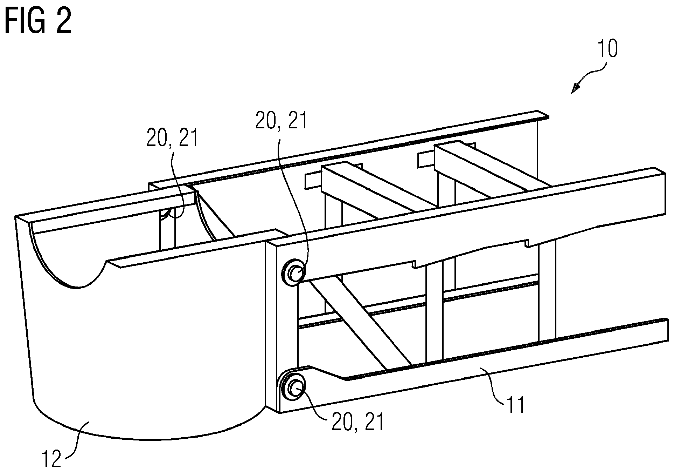

Figure 2 shows a support assembly 10 comprising a support structure 11 and a bed frame 12 coupled together with a plurality of pins 21. The support structure 11 comprises a plurality of load carrying beams coupled together. Additionally, the support structure 11 comprises a floor level support where components of the wind turbine 1 can be supported. Additionally, the support structure 11 comprises an upper level support where components of the wind turbine 1 can be supported. The different horizontally oriented beam sets are connected together by vertical and diagonal beams.

The support assembly 10 further comprises a coupling means 20 to couple the support structure 11 to the bed frame 12, wherein the coupling means 20 comprises a plurality of pins 21 inserted in insertion holes.

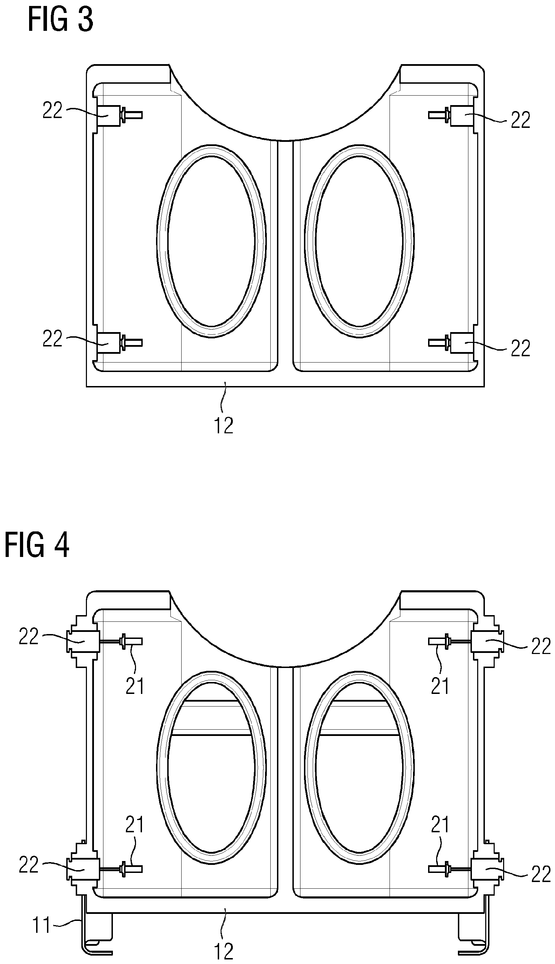

Figure 3 shows a plurality of hydraulic actuators 22 attached to the bed frame 12 of the support assembly 10. There are four hydraulic actuators 22 attached. The hydraulic actuator are hydraulic cylinders used to give a unidirectional force through a unidirectional stroke by means of a pressurized hydraulic fluid to press the pins 21 inside the insertion holes. The hydraulic cylinder comprises a cylinder barrel, in which a piston connected to a piston rod moves back and forth.

Figure 4 shows the bed frame 12 of Figure 3 coupled to the support structure 11 of the support assembly 10, wherein the pistons of the hydraulic actuators 22 are outside the cylinder barrels and therefore pressing the pins 21 in the insertion holes of the support structure 11.

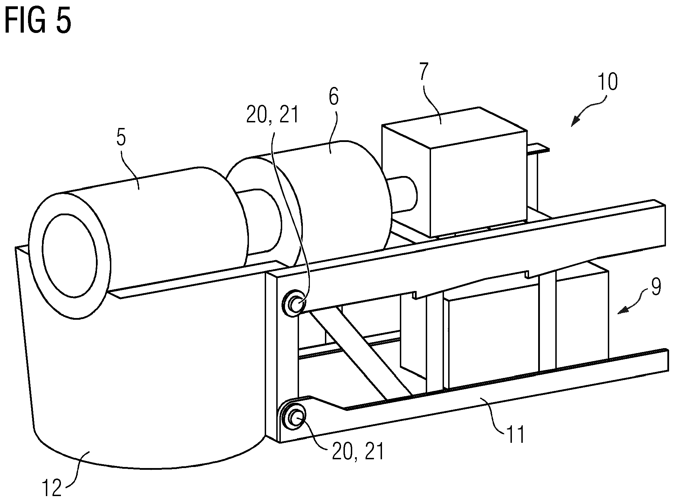

Figure 5 shows a drive train and electrical components of a wind turbine 1 supported by the support assembly 10. The main bearing 5 is supported by the bed frame 12. The gearbox 6 is partly supported by the bed frame 12 and partly supported by the support structure 11. The generator 7 is supported by the support structure 11. The drive train is arranged at the upper level support of the support structure 11. Electrical equipment 9, such as a converter and a control unit is arranged at the floor level support of the support structure 11.

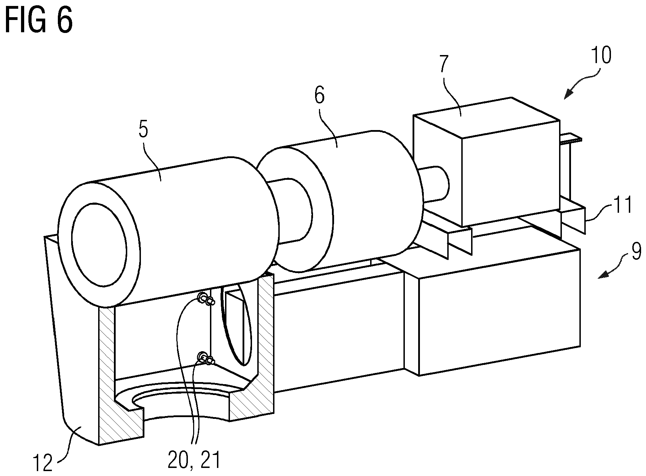

Figure 6 shows a cross sectional view of Figure 5, wherein the hydraulic actuators 22 arranged inside the bed frame 12 can be seen in this figure. Arranging the hydraulic actuators 22 inside the bed frame protects the hydraulic actuators 22 from damage during transport, installation and operation of the wind turbine 1.

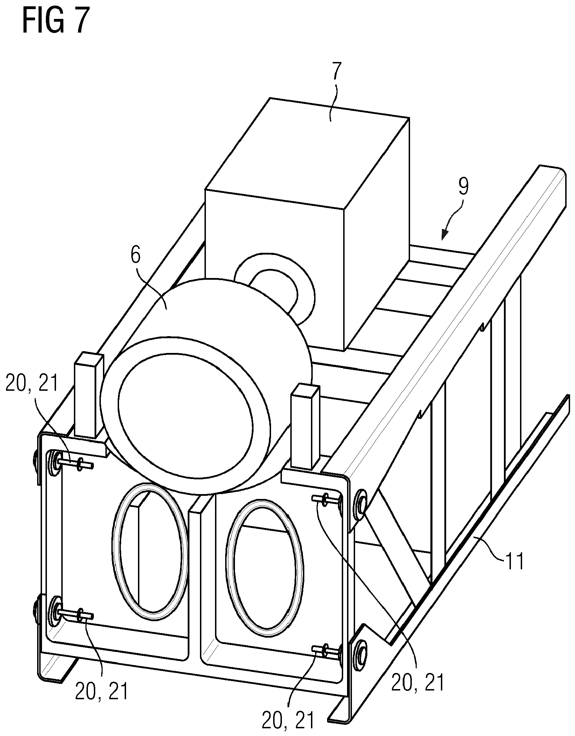

Figure 7 shows a cross sectional view of Figure 5 from another perspective, wherein the hydraulic actuators 22 with the pistons outside the cylinder barrels can be seen.

### Reference List

- 1: Wind turbine
- 2: Nacelle
- 3: Hub
- 4: Blade
- 5: Main bearing
- 6: Gearbox
- 7: Generator
- 8: Tower
- 9: Electrical equipment

- 10: Support assembly
- 11: Support structure
- 12: Bed frame

- 20: Coupling means
- 21: Pins
- 22: Hydraulic actuators

## Claims

1. A support assembly (10) for carrying at least a part of the load of a drive train, a canopy structure and/or other components arranged inside a nacelle (2) of a wind turbine (1), the support assembly (10) comprising:
a bed frame (12) structurally establishing a connection between the drive train and/or the nacelle (2) and a tower (8) of the wind turbine (1), and
a support structure (11) coupled to the bed frame (12) configured to support at least a part of the load of the canopy structure and/or components arranged inside the nacelle (2),
**characterized in that** the support assembly (10) further comprises a coupling means (20) to couple the support structure (11) to the bed frame (12), wherein the coupling means (20) comprises a plurality of pins (21) configured to be inserted in insertion holes.

2. The support assembly (10) according to claim 1, **characterized in that** the pins (21) are arranged at the support structure (11) and the insertion holes are arranged at the bed frame (12).

3. The support assembly (10) according to claim 1, **characterized in that** the pins (21) are arranged at the bed frame (12) and the insertion holes are arranged at the support structure (11).

4. The support assembly (10) according to claim 2, **characterized in that** the pins (21) are inserted inside the support structure (11) during transport to reduce the width of the support structure (11) and avoid damages to the pins (21).

5. The support assembly (10) according to claim 3, **characterized in that** the pins (21) are inserted inside the bed frame (12) during transport to reduce the width of the bed frame (12) and avoid damages to the pins (21).

6. The support assembly (10) according to any of the preceding claims, **characterized in that** said support assembly (10) further comprises hydraulic actuators (22) for engaging the pins (21) in the insertion holes.

7. The support assembly (10) according to claim 6, **characterized in that** the hydraulic actuators (22) are configured to keep the pins (21) in the inserted position, particulary during operation of the wind turbine (1) when the pins (21) might loosen, by pressing against the pins (21) to reinsert the pins (21) in the insertion holes.

8. The support assembly (10) according to claim 6 or 7, **characterized in that** the hydraulic actuators (22) have an adjustable stroke.

9. The support assembly (10) according to any of the preceding claims, **characterized in that** a yaw system is arranged at the bed frame (12) to yaw the nacelle (2) of the wind turbine (1).

10. The support assembly (10) according to any of the preceding claims, **characterized in that** the support structure (11) comprises a plurality of load carrying beams or bars coupled together.

11. The support assembly (10) according to any of the preceding claims, **characterized in that** the support structure (11) comprises a floor level support where components of the wind turbine (1), in particular a converter, can be supported.

12. The support assembly (10) according to any of the preceding claims, **characterized in that** the support structure (11) comprises an upper level support where components of the wind turbine (1), in particular a main bearing (5), a gearbox (6) and/or a generator (7) of a drive train of the wind turbine (1), can be supported.

13. The support assembly (10) according to claim 2, **characterized in that** said support assembly (10) further comprises a control system to monitor the insertion depth of the pins (21) in the insertion holes.

14. The support assembly (10) according to claim 12, **characterized in that** a warning message is displayed by the control system when a pin (21) loosens outside the tolerance values set at the system.

15. A method for coupling a support structure (11) to a bed frame (12) of a support assembly (10) of a wind turbine (1), the support assembly (10) comprising a coupling means (20) to couple the support structure (11) to the bed frame (12), wherein the coupling means (20) comprises a plurality of pins (21) configured to be inserted in insertion holes, the method comprising the steps of
- placing the support structure (11) at a position where the pins (21) can be slid in the insertion holes to couple the support structure (11) to the bed frame (12), and
- inserting the pins (21) into the insertion holes by means of hydraulic actuators (22).
